(19) Europäisches Patentamt
European Patent Office
Office européen des brevets

(11) **EP 2 264 698 A1**

(12) **EUROPEAN PATENT APPLICATION**
published in accordance with Art. 153(4) EPC

(43) Date of publication:
**22.12.2010 Bulletin 2010/51**

(21) Application number: **09727068.0**

(22) Date of filing: **03.04.2009**

(51) Int Cl.:
**G10L 19/00** (2006.01)

(86) International application number:
**PCT/JP2009/001572**

(87) International publication number:
**WO 2009/122757 (08.10.2009 Gazette 2009/41)**

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(30) Priority: **04.04.2008 JP 2008098736**
**05.11.2008 JP 2008284492**

(71) Applicant: **Panasonic Corporation**
**Kadoma-shi**
**Osaka 571-8501 (JP)**

(72) Inventor: **MORII, Toshiyuki**
**Chuo-ku**
**Osaka 540-620 (JP)**

(74) Representative: **Grünecker, Kinkeldey,**
**Stockmair & Schwanhäusser**
**Anwaltssozietät**
**Leopoldstrasse 4**
**80802 München (DE)**

(54) **STEREO SIGNAL CONVERTER, STEREO SIGNAL REVERSE CONVERTER, AND METHODS FOR BOTH**

(57) Disclosed are a stereo signal converter whereby it is possible to obtain low-redundancy encoding signals (M, S) even when the sound source locations are different, and a stereo signal reverse converter whereby it is possible to obtain higher-quality stereo signals. In a stereo signal converter (101), a correlation analyzer (111) calculates the power (PL) of a left channel signal (L), the power (PR) of a right channel signal (R), and a correlation value (CLR) using the left channel signal (L) and the right channel signal (R). A coefficient calculator (113) calcu-
lates a coefficient a by means of the correlation value (CLR) outputted from the correlation analyzer (111) based on the magnitude relationship between the power (PL) and the power (PR). A sum-difference calculator (115) adds the left channel signal (L) and the right channel signal (R) to generate a monaural signal (M). Also, the sum-difference calculator (115) generates a side signal (S) using the magnitude relationship between the power (PL) and the power (PR), and a coefficient obtained by encoding and decoding a.

FIG.1

**Description**

Technical Field

The present invention relates to a stereo signal converting apparatus, stereo signal inverse-converting apparatus and converting and inverse-converting methods used in an encoding apparatus and decoding apparatus that realize stereo speech coding.

Background Art

Speech coding is generally used for communication applications using narrowband speech of the telephone band (200 Hz to 3.4 kHz). Narrowband speech codec of monaural speech is widely used in communication applications including speech communication through mobile phones, remote conference devices and recent packet networks (e.g. the Internet).

Recently, with broadbandization of communication networks, there is a demand for realistic sensation in speech communication and high quality of music. To meet this demand, speech communication systems using coding techniques of stereo speech have been developed.

As a method of encoding stereo speech, there is a known conventional method of finding a monaural signal based on a sum of the left channel signal and the right channel signal, finding a side signal based on the difference between the left channel signal and the right channel signal, and encoding these signals (see Patent Literature 1).

The left channel signal and the right channel signal represent sound heard by human ears, the monaural signal can represent the common part between the left channel signal and the right channel signal, and the side signal can represent the spatial difference between the left channel signal and the right channel signal.

There is a high correlation between the left channel signal and the right channel signal. Consequently, compared to the case of encoding the left channel signal and the right channel signal directly, it is possible to perform more suitable coding in accordance with features of a monaural signal and side signal by encoding the left channel signal and right channel signal converted into a monaural signal and a side signal, so that it is possible to realize coding with less redundancy, low bit rate and high quality.

Citation List

Patent Literature

   [PTL 1]
   Patent 2001-255892

Summary of Invention

Technical Problem

However, even in a case where the left channel signal and the right channel signal share the same main elements, if the excitation position varies between these signals, the correlation between the left channel signal and the right channel signal at the same time becomes low. Therefore, when the left channel signal and the right channel signal are converted into a monaural signal and a side signal and then encoded simply, if the excitation position varies significantly, the monaural signal and the side signal still including redundancy are quantized inefficiently.

It is therefore an object of the present invention to provide a stereo signal converting apparatus, stereo signal inverse-converting apparatus and converting and inverse-converting methods for providing less redundant coding signals (M, S) on the encoding apparatus side even if the excitation position varies, and for providing stereo signals of higher quality on the decoding apparatus side.

Solution to Problem

The stereo signal converting apparatus of the present invention employs a configuration having: a correlation analyzing section that calculates a correlation value between a first channel signal and a second channel signal forming a stereo signal; a coefficient calculating section that calculates a first coefficient based on the correlation value; a coefficient encoding section that encodes the first coefficient and calculates a second coefficient based on resulting encoded data; and a sum and difference calculating section that generates a monaural signal related to a sum of the first channel signal and the second channel signal, and, using the second coefficient, generates a side signal related to a difference between the first channel signal and the second channel signal.

The stereo signal inverse-converting apparatus of the present invention employs a configuration having: a coefficient decoding section that decodes encoded data, which is acquired in a stereo signal converting apparatus by encoding a first coefficient calculated based on a correlation value between a first channel signal and a second channel signal forming a stereo signal, and calculates a second coefficient; and a reconstructed signal generating section that generates a reconstructed signal of the first channel signal and a reconstructed signal of the second channel signal using a monaural reconstructed signal, a side reconstructed signal and the second coefficient, the monaural reconstructed signal decoding encoded data of a monaural signal related to a sum of the first channel signal and the second channel signal, and the side reconstructed signal decoding encoded data of a side signal related to a difference between the first channel signal and the second channel signal.

The stereo signal converting method of the present invention includes: a correlation analyzing step of calculating a correlation value between a first channel signal and a second channel signal forming a stereo signal; a coefficient calculating step of calculating a first coefficient based on the correlation value; a coefficient encoding step of encoding the first coefficient and calculating a second coefficient based on resulting encoded data; and a sum and difference calculating step of generating a monaural signal related to a sum of the first channel signal and the second channel signal, and, using the second coefficient, generating a side signal related to a difference between the first channel signal and the second channel signal.

The stereo signal inverse-converting method of the present invention includes: a coefficient decoding step of decoding encoded data, which is acquired in a stereo signal converting method by encoding a first coefficient calculated based on a correlation value between a first channel signal and a second channel signal forming a stereo signal, and calculating a second coefficient; and a reconstructed signal generating step of generating a reconstructed signal of the first channel signal and a reconstructed signal of the second channel signal using a monaural reconstructed signal, a side reconstructed signal and the second coefficient, the monaural reconstructed signal decoding encoded data of a monaural signal related to a sum of the first channel signal and the second channel signal, and the side reconstructed signal decoding encoded data of a side signal related to a difference between the first channel signal and the second channel signal.

Advantageous Effects of Invention

According to the present invention, the encoding apparatus side finds side signal S by multiplying one of left channel signal L and right channel signal R by coefficient $\alpha$ calculated using the correlation between stereo signals (L, R), so that, even if the excitation position varies, it is possible to provide less redundant coding signals (M, S) on the encoding apparatus side and provide stereo signals of high quality on the decoding apparatus side.

Brief Description of Drawings

FIG.1 is a block diagram showing the configuration of an encoding apparatus including a stereo signal converting apparatus according to Embodiment 1 of the present invention;
FIG.2 shows an example of a codebook to use upon encoding coefficient $\alpha$ in a coefficient encoding section of a stereo signal converting apparatus according to Embodiment 1 of the present invention;
FIG.3 is a flowchart showing a search algorithm in a coefficient encoding section of a stereo signal converting apparatus according to Embodiment 1 of the present invention;
FIG.4 is a block diagram showing the configuration of a decoding apparatus including a stereo signal inverse-converting apparatus according to Embodiment 1 of the present invention;
FIG.5 is a block diagram showing the configuration of an encoding apparatus including a stereo signal converting apparatus according to Embodiment 3 of the present invention; and
FIG.6 is a block diagram showing the configuration of a decoding apparatus including a stereo signal inverse-converting apparatus according to Embodiment 3 of the present invention.

Description of Embodiments

Embodiments of the present invention will be explained below in detail with reference to the accompanying drawings. Here, example cases will be explained with embodiments where a stereo signal is comprised of two signals of the left channel signal and the right channel signal. Also, the left channel signal, the right channel signal, the monaural signal and the side signal are represented by "L," "R," "M" and "S," respectively, and their reconstructed signals are represented by "L'," "R'," "M'" and "S'," respectively. Here, the association relationships between the names of the signals and their signs are not limited to the above. Also, in embodiments, the same components will be assigned the same reference numerals and their overlapping explanation will be omitted.

(Embodiment 1)

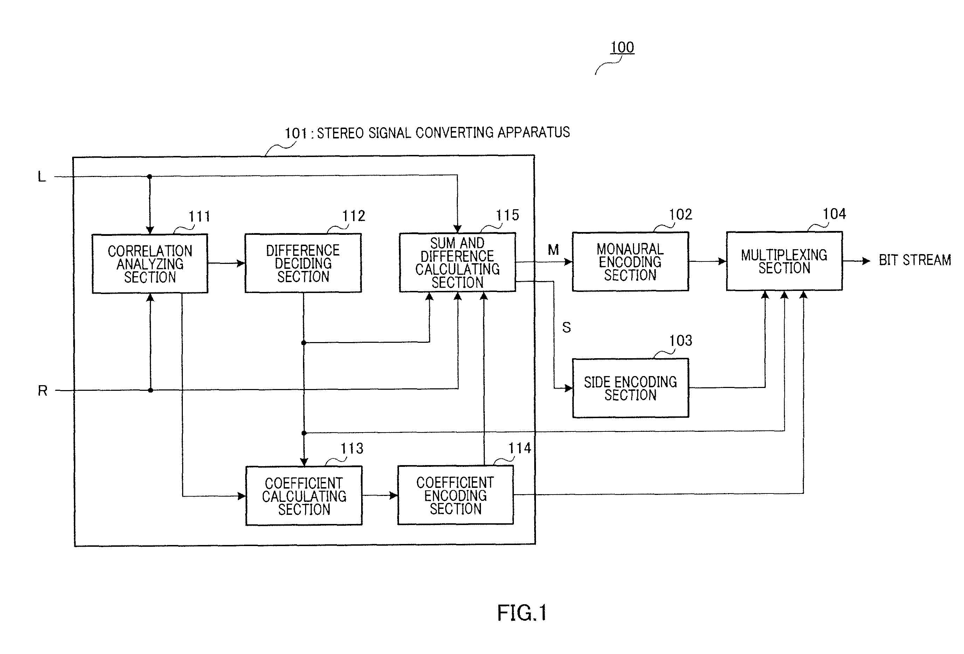

FIG.1 is a block diagram showing the configuration of an encoding apparatus including a stereo signal converting apparatus according to Embodiment 1 of the present invention. Encoding apparatus 100 shown in FIG.1 is mainly provided with stereo signal converting apparatus 101, monaural encoding section 102, side encoding section 103 and multiplexing section 104.

Stereo signal converting apparatus 101 generates monaural signal M, which is a sum of left channel signal L and right channel signal R, and generates side signal S, the value of which is given by subtracting, from one of left channel signal L and right channel signal R, the value multiplying the other signal by coefficient $\alpha$. Further, stereo signal converting apparatus 101 outputs monaural signal M to monaural encoding section 102 and outputs side signal S to side encoding section 103. Further, stereo signal converting apparatus 101 outputs one-bit data showing the power magnitude relationship between left channel signal L and right channel signal R (hereinafter "power data"), and data encoding coefficient $\alpha$, to multiplexing section 104.

Monaural encoding section 102 encodes monaural signal M and outputs the resulting encoded data to multiplexing section 104. Side encoding section 103 encodes side signal S and outputs the resulting encoded data to multiplexing section 104.

Multiplexing section 104 multiplexes encoded data of monaural signal M, encoded data of side signal S, power data and encoded data of coefficient $\alpha$, and outputs the resulting bit stream.

Next, the configuration inside stereo signal converting apparatus 101 will be explained. Stereo signal converting apparatus 101 is provided with correlation analyzing section 111, difference deciding section 112, coefficient calculating section 113, coefficient encoding section 114 and sum and difference calculating section 115.

Using left channel signal L and right channel signal R, correlation analyzing section 111 calculates power $P_L$ of left channel signal L, power $P_R$ of right channel signal R and correlation value $C_{LR}$, according to following equation 1. Further, correlation analyzing section 111 outputs power $P_L$ and power $P_R$ to difference deciding section 112 and outputs power $P_L$, power $P_R$ and correlation value $C_{LR}$ to coefficient calculating section 113. Here, in equation 1, $X_i^L$ represents the signal value of left channel signal L at sample timing i, and $X_i^R$ represents the signal value of right channel signal R at sample timing i.

$$[1]$$

$$P_L = \sum_i X_i^L \times X_i^L$$
$$P_R = \sum_i X_i^R \times X_i^R \qquad \ldots (\text{Equation 1})$$
$$C_{LR} = \sum_i X_i^L \times X_i^R$$

Difference deciding section 112 compares the magnitudes of power $P_L$ and power $P_R$ outputted from correlation analyzing section 111, and outputs one-bit power data representing the comparison result to multiplexing section 104, coefficient calculating section 113 and sum and difference calculating section 115. To be more specific, difference deciding section 112 outputs power data of code "0" when $P_L \geq P_R$, or outputs power data of code "1" when $P_L < P_R$.

Based on power data outputted from difference deciding section 112, coefficient calculating section 113 calculates coefficient $\alpha$ using power $P_L$, power $P_R$ and correlation value $C_{LR}$ outputted from correlation analyzing section 111, according to following equation 2, and outputs the result to coefficient encoding section 114.

$$[2]$$

$$\text{If } P_L \geq P_R: \quad \alpha = (P_R + C_{LR})/(P_L + C_{LR})$$
$$\text{If } P_L < P_R: \quad \alpha = (P_L + C_{LR})/(P_R + C_{LR}) \qquad \ldots (\text{Equation 2})$$

where in the case where the denominator ( or ) is 0.

As clear from above equation 2, $\alpha$ is -1<$\alpha\leq$1, and is the value to be easily encoded because $\alpha$ has upper and lower limits. Here, $\alpha$ equals 1 when $P_L = P_R$, and $\alpha$ becomes close to -1 when left channel signal L and right channel signal R have opposite phases and one has a slightly higher amplitude than the other.

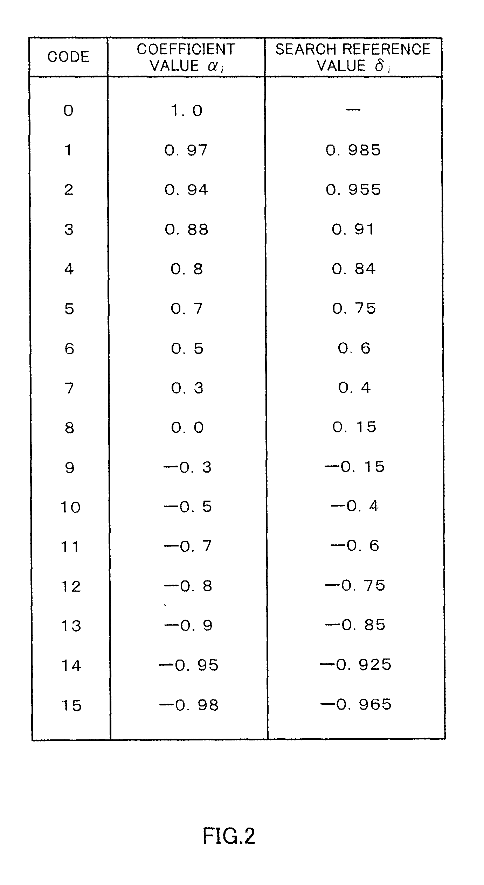

Coefficient encoding section 114 encodes coefficient $\alpha$ outputted from coefficient calculating section 113, with reference to a codebook stored inside, and outputs the result to multiplexing section 104. With the present embodiment, coefficient $\alpha$ is encoded with four bits. Here, the power ratio (absolute value) of coefficient $\alpha$ is likely to be closer to a value of 1, and, consequently, the codebook as shown in FIG.2 is used upon encoding coefficient $\alpha$. With the codebook shown in FIG.2, coefficient value $\alpha_i$ is assigned to each code such that, when the absolute value of coefficient value $\alpha_i$ is closer to 1.0, the interval between absolute values becomes shorter. As for a search using this codebook, with a tree search, it is possible to perform a search with a small amount of calculations. The tree search uses search reference value $\delta_i$ of the codebook shown in FIG.2. The search algorithm will be described later in detail.

Also, coefficient encoding section 114 outputs coefficient value $\alpha_i$ corresponding to encoded data of coefficient $\alpha$, to sum and difference calculating section 115.

As shown in following equation 3, sum and difference calculating section 115 generates monaural signal M by adding left channel signal L and right channel signal R. Further, sum and difference calculating section 115 generates side signal S using power data outputted from difference deciding section 112 and coefficient value $\alpha_i$ outputted from coefficient encoding section 114, according to following equation 4. Also, in equations 3 and 4, $X_i^M$ represents the signal value of monaural signal M at sample timing i, and $X_i^S$ represents the signal value of side signal S at sample timing i. Then, sum and difference calculating section 115 outputs monaural signal M to monaural encoding section 102 and outputs side signal S to side encoding section 103.

$$[3]$$

$$X_i^M = X_i^L + X_i^R \quad \ldots (\text{Equation 3})$$

$$[4]$$

$$\text{If } P_L \geq P_R: \quad X_i^S = X_i^L - \alpha_i \cdot X_i^R$$

$$\text{If } P_L < P_R: \quad X_i^S = X_i^R - \alpha_i \cdot X_i^L \quad \ldots (\text{Equation 4})$$

Monaural signal M generated in sum and difference calculating section 115 represents the main elements of left channel signal L and right channel signal R. Also, side signal S generated in sum and difference calculating section 115 is substantially orthogonal to monaural signal M as a vector, and can show the spatially different part between left channel signal L and right channel signal R more faithfully than the prior art, so that it is possible to provide stereo signals of high quality on the decoding apparatus side.

Also, if sum and difference calculating section 115 generates side signal S using coefficient $\alpha$ before coding, side signal S and monaural signal M provide a product sum of 0 as shown in following equation 5, and are therefore completely orthogonal as vectors. Here, equation 5 shows a case where $P_L < P_R$.

[5]

$$\sum_i X_i^M \cdot X_i^S = \sum_i (X_i^L + X_i^R) \cdot (X_i^L - \alpha \cdot X_i^R)$$

$$= \sum_i X_i^L \cdot X_i^L + \sum_i X_i^R \cdot X_i^L - \alpha \cdot (\sum_i X_i^L \cdot X_i^R + \sum_i X_i^R \cdot X_i^R)$$

$$= P_L + C_{LR} - \alpha \cdot (C_{LR} + P_R) \qquad \ldots(\text{Equation } 5)$$

$$= P_L + C_{LR} - (P_L + C_{LR})/(P_R + C_{LR}) \cdot (C_{LR} + P_R)$$

$$= 0$$

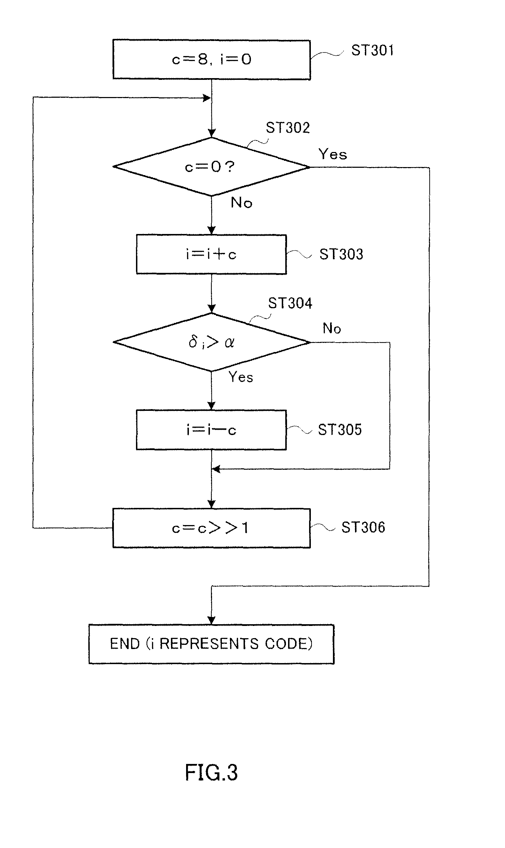

Next, the search algorithm in coefficient encoding section 114 will be explained using FIG.3.

First, in ST 301, search width c is set to 8, which is half of the codebook size of 16, and code buffer i is set to 0. Next, in ST 302, whether or not search width c is 0 is decided, and the codebook search is finished when search width c is 0 (Yes in ST 302), or, otherwise, the flow proceeds to ST 303 (No in ST 302).

In the event of "No" in ST 302, the value of search width c is added to code buffer i in ST 303. Next, search reference value $\delta_i$ and coefficient $\alpha$ are compared in ST 304, and, if coefficient $\alpha$ is less than search reference value $\delta_i$, the flow proceeds to ST 305 (Yes in ST 304), or, if coefficient $\alpha$ is equal to or greater than search reference value $\delta_i$, the flow proceeds to ST 306 (No in ST 304).

In the event of "Yes" in ST 304, the value of search width c is subtracted from code buffer i in ST 305. Next, in ST 306, the value of search width c is subjected to one-bit shift to the right, and the flow proceeds to ST 302. Here, "c>>1" indicates that the value of c is subjected to one-bit shift to the right.

In the event of "No" in ST 304, the value of search width c is subjected to one-bit shift to the right in ST 306, and the flow proceeds to ST 302.

Then, code buffer i at the time the codebook search is over, represents the code.

By performing a search as above, the search width in ST 306 becomes 8, 4, 2, 1 and 0, that is, becomes "0" at a fifth time. Consequently, the search loop from ST 303 to ST 306 is implemented four times only. Therefore, it is possible to search a codebook in sixteen patterns with a small amount of calculations. Also, the above method is not limited to sixteen patterns, and can be equally used in a search of a codebook of a power of two size.

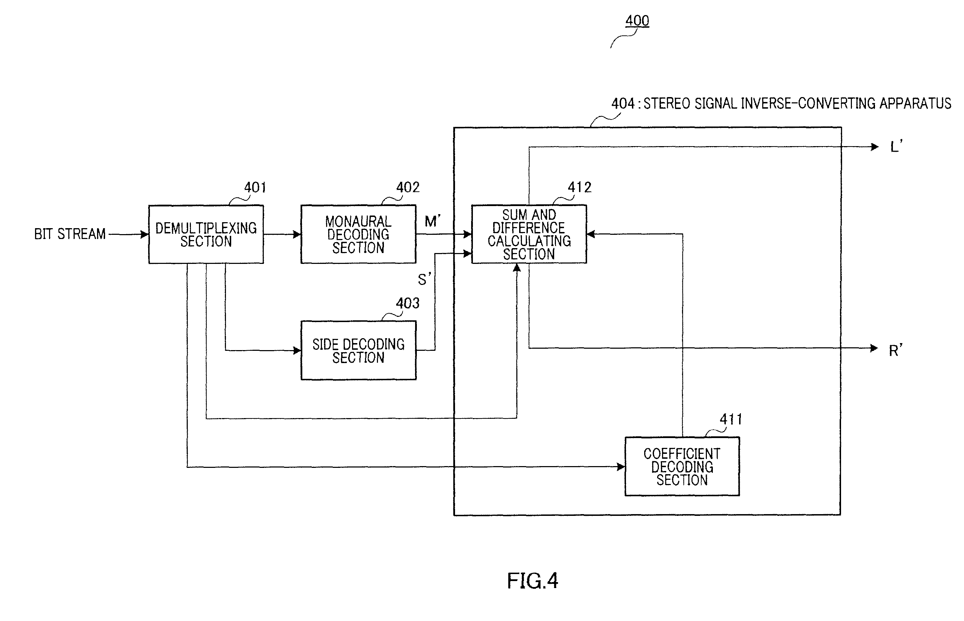

FIG.4 is a block diagram showing the configuration of a decoding apparatus including a stereo signal inverse-converting apparatus according to the present embodiment. Decoding apparatus 400 shown in FIG.4 is mainly provided with demultiplexing section 401, monaural decoding section 402, side decoding section 403 and stereo signal inverse-converting apparatus 404.

Demultiplexing section 401 demultiplexes a bit stream received in decoding apparatus 400, and outputs encoded data of monaural signal M to monaural decoding section 402, encoded data of side signal S to side decoding section 403, encoded data of coefficient $\alpha$ and power data to stereo signal inverse-converting apparatus 404.

Monaural decoding section 402 decodes the encoded data of monaural signal M and outputs resulting monaural reconstructed signal M' to stereo signal inverse-converting apparatus 404. Side decoding section 403 decodes the encoded data of side signal S and outputs resulting side reconstructed signal S' to stereo signal inverse-converting apparatus 404.

Stereo signal inverse-converting apparatus 404 provides left channel reconstructed signal L' and right channel reconstructed signal R' using the encoded data of coefficient $\alpha$, the power data, monaural reconstructed signal M' and side reconstructed signal S'.

Nest, the configuration inside stereo signal inverse-converting apparatus 404 will be explained. Stereo signal inverse-converting apparatus 404 is provided with coefficient decoding section 411 and sum and difference calculating section 412.

Coefficient decoding section 411 decodes encoded data of coefficient $\alpha$ with reference to the same codebook as in FIG.2 stored inside, and outputs coefficient value $\alpha_i$ corresponding to the encoded data of coefficient $\alpha$ to sum and difference calculating section 412. Here, a codebook inside coefficient decoding section 411 does not require search reference value $\delta_i$ shown in FIG.2.

Sum and difference calculating section 412 calculates left channel reconstructed signal L' and right channel reconstructed signal R' according to following equation 6, using monaural reconstructed signal M' outputted from monaural decoding section 402, side reconstructed signal S' outputted from side decoding section 403, the power data and coefficient value $\alpha_i$. Here, in equation 6, $Y_i^M$ represents the signal value of monaural reconstructed signal M' at sample timing i, $Y_i^S$ represents the signal value of side reconstructed signal S' at sample timing i, $Y_i^L$ represents the signal value of left channel reconstructed signal L' at sample timing i, and $Y_i^R$ represents the signal value of right channel reconstructed signal R' at sample timing i.

[6]

$$\text{If } P_L < P_R$$

$$Y_i^L = \left(\alpha_i/(1+\alpha_i)\right) \cdot Y_i^M + \left(1/(1+\alpha_i)\right) \cdot Y_i^S$$
$$Y_i^R = \left(1/(1+\alpha_i)\right) \cdot Y_i^M - \left(1/(1+\alpha_i)\right) \cdot Y_i^S$$

$$\text{If } P_L \geq P_R$$

$$Y_i^L = \left(1/(1+\alpha_i)\right) \cdot Y_i^M - \left(1/(1+\alpha_i)\right) \cdot Y_i^S$$
$$Y_i^R = \left(\alpha/(1+\alpha_i)\right) \cdot Y_i^M + \left(1/(1+\alpha_i)\right) \cdot Y_i^S \quad \ldots(\text{Equation } 6)$$

As described above, according to the present embodiment, the encoding apparatus side finds side signal S, using the value multiplying one of left channel signal L and right channel signal R by coefficient $\alpha$ calculated using the correlation between stereo signals (L, R), so that side signal S is orthogonal to monaural signal M as a vector (i.e. the inner product is zero). Therefore, even if the excitation position varies, it is possible to provide less redundant coding signals (M, S) on the encoding apparatus side and provide stereo signals of high quality on the decoding apparatus side.

(Embodiment 2)

A case will be explained with Embodiment 2 where the step of finding the difference between left channel signal L and right channel signal R is fixed.

Also, the present embodiment differs from Embodiment 1 only in the function of sum and difference calculating section 115 of stereo signal converting apparatus 101 and the function of sum and difference calculating section 412 of stereo signal inverse-converting apparatus 404. This point will be explained below.

Here, a case is assumed with the present embodiment where sum and difference calculating section 115 is fixed to subtract right channel signal R multiplied by $\alpha_i$ from left channel signal L, and sum and difference calculating section 412 is fixed to find a difference upon calculating right channel reconstructed signal R'.

Sum and difference calculating section 115 finds monaural signal M according to following equation 7 and finds side signal S according to following equation 8, using left channel signal L, right channel signal R, power data outputted from difference deciding section 112 and coefficient value $\alpha_i$ outputted from coefficient encoding section 114.

[7]

$$X_i^M = X_i^L + X_i^R \quad \ldots(\text{Equation } 7)$$

[8]

$$\text{If } P_L < P_R : \beta = \alpha_i$$
$$\text{If } P_L \geq P_R : \beta = 1/\alpha_i$$

$$X_i^S = X_i^L - \beta \cdot X_i^R \quad \ldots(\text{Equation } 8)$$

Also, sum and difference calculating section 412 calculates left channel reconstructed signal L' and right channel reconstructed signal R' according to following equation 9, based on monaural reconstructed signal M', side reconstructed signal S', power data and coefficient value $\alpha_i$ corresponding to encoded data of coefficient $\alpha$.

$$[9]$$

$$\text{If } P_L < P_R: \ \beta = \alpha_i$$

$$\text{If } P_L \geq P_R: \ \beta = 1/\alpha_i$$

$$Y_i^L = \left(\beta/(1+\beta)\right) \cdot Y_i^M + \left(1/(1+\beta)\right) \cdot Y_i^S$$
$$Y_i^R = \left(1/(1+\beta)\right) \cdot Y_i^M - \left(1/(1+\beta)\right) \cdot Y_i^S$$

$$\dots (\text{Equation } 9)$$

Here, as clear from the codebook of FIG.2, a case might occur where coefficient value $\alpha_i$=0. In this case, the reciprocal cannot be found, and therefore $\beta$=0.

Here, even in the above case of "0," by calculating reciprocal coefficient value $1/\alpha$ in advance and storing the result in a codebook, it is possible to omit the process of calculation.

Thus, according to the present embodiment, the step of finding the difference between left channel signal L and right channel signal R is fixed on the encoding apparatus side, thereby providing good continuity of monaural signal M. By this means, in a case where discontinuity occurs, it is not necessary to encode an extreme waveform in the discontinuous part, so that it is possible to perform coding more efficiently, and the decoding side can provide stereo signals of high quality.

Also, a case has been described above with the present embodiment where the step of finding a difference is fixed to subtract right channel signal R from left channel signal L, the present invention is equally applicable to a case where that step is fixed to subtract left channel signal L from right channel signal R. In this case, left channel signal L and right channel signal R need to be replaced with each other in explanation of the present embodiment.

(Embodiment 3)

An example case will be described with Embodiment 3 where coefficient $\varepsilon$, which is used upon finding a side signal from left channel signal L and right channel signal R in the first signal conversion unit of the current signal conversion target, is calculated using coefficient $\varepsilon$ used in a second signal conversion unit before the first signal conversion unit. Further, an example case will be explained where a coefficient used per element of a channel signal vector is gradually changed between elements to make a side signal vector and monaural signal vector orthogonal while securing continuity. Here, a case will be explained below where a frame is used as a signal conversion unit.

Here, as an example, Embodiment 3 realizes the above orthogonality by an algorithm for changing coefficient $\varepsilon$ linearly. Also, the step of finding the difference between left channel signal L and right channel signal R is fixed, and the multiplication result of signal R and coefficient $\varepsilon$ is subtracted from signal L.

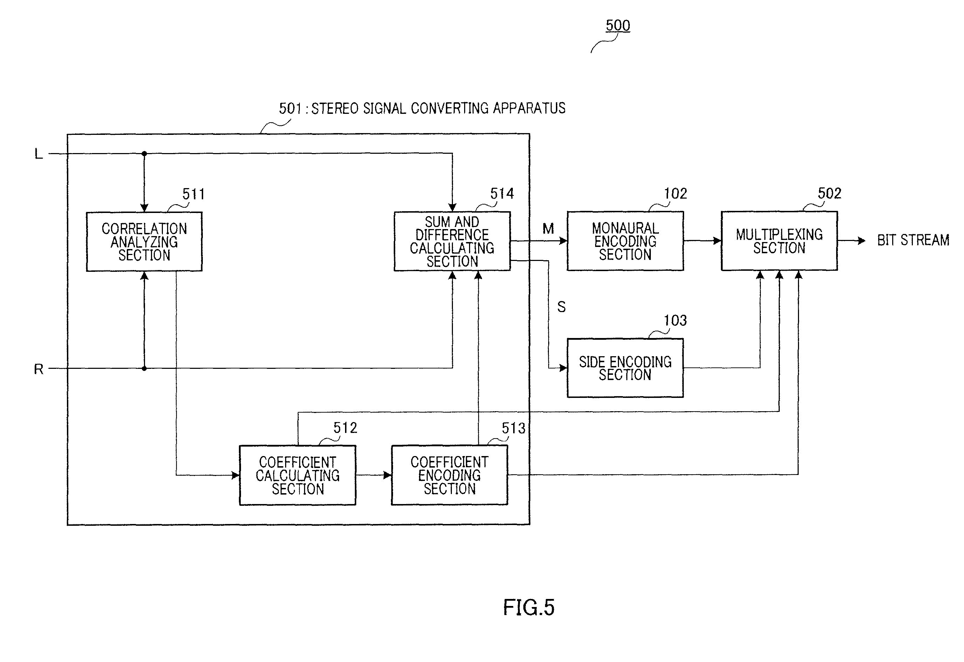

FIG.5 is a block diagram showing the configuration of an encoding apparatus including a stereo signal converting apparatus according to Embodiment 3 of the present invention. Encoding apparatus 500 shown in FIG.5 is mainly provided with stereo signal converting apparatus 501, monaural encoding section 102, side encoding section 103 and multiplexing section 502.

Stereo signal converting apparatus 501 is provided with correlation analyzing section 511, coefficient calculating section 512, coefficient encoding section 513 and sum and difference calculating section 514.

Using left channel signal L and right channel signal R according to following equation 10, correlation analyzing section 511 calculates power $P_L$ of left channel signal L, power $P_R$ of right channel signal R, correlation value $C_{LR}$, power $P_R^{(i)}$ of right channel signal R weighted by the element number, and correlation value $C_{LR}^{(i)}$ weighted by the element number. Here, "i" represents the element number (corresponding to the sample timing), and "I" represents the number of elements (vector length).

[10]

$$P_L = \sum_{i=1}^{I} X_i^L \cdot X_i^L$$

$$P_R = \sum_{i=1}^{I} X_i^R \cdot X_i^R$$

$$C_{LR} = \sum_{i=1}^{I} X_i^L \cdot X_i^R \qquad \dots(\text{Equation } 10)$$

$$P_R^{(i)} = \sum_{i=1}^{I} \frac{i}{I} \cdot X_i^R \cdot X_i^R$$

$$C_{LR}^{(i)} = \sum_{i=1}^{I} \frac{i}{I} \cdot X_i^L \cdot X_i^R$$

Coefficient calculating section 512 calculates coefficient $\varepsilon$ in the current frame, using coefficient $\varepsilon$ calculated in a past frame.

To be more specific, first, according to equation 11, coefficient calculating section 512 calculates value $\gamma$ (coefficient calculation base value) to derive coefficient $\varepsilon$ of the calculation target in the current frame, using $P_L$, $P_R$, $C_{LR}$, $P_R^{(i)}$, $C_{LR}^{(i)}$ and $\eta^{(-1)}$ calculated in correlation analyzing section 511. Here, value $\eta^{(-1)}$ of coefficient $\varepsilon$ calculated in the previous frame is used as coefficient $\varepsilon$ calculated in a past frame.

[11]

$$\gamma = \frac{P_L + C_{LR} - \eta^{(-1)} \cdot \left(P_R + C_{LR} - P_R^{(i)} - C_{LR}^{(i)}\right)}{P_R^{(i)} + C_{LR}^{(i)}} \qquad \dots(\text{Equation } 11)$$

$\gamma$: the value to derive a coefficient (coefficient calculation base value)
$\eta$: a coefficient used in previous frame (where the initial value is a predetermined fixed value)

Next, using coefficient calculation base value $\gamma$, coefficient calculating section 512 calculates coefficient $\varepsilon$ according to equation 12, and provides identification information of a conversion mode used upon calculating coefficient $\varepsilon$ from coefficient calculation base value $\gamma$ (i.e. identification information m of a conversion equation). The conversion mode is switched in accordance with the magnitude of coefficient calculation base value $\gamma$.

[12]

$$if \quad -1 < \gamma < 1 \quad then \quad \{m = 0 \quad \varepsilon = \gamma\}$$
$$else \quad \{m = 1 \quad \varepsilon = 1/\gamma\} \quad \dots(\text{Equation } 12)$$

$\varepsilon$: coefficient (coding target), m: conversion mode

In above equation 12, identification information m=0 indicates a no-conversion mode in which $\gamma$ is used as is as $\varepsilon$, and identification information m=1 indicates a conversion mode in which the reciprocal of $\gamma$ is used as $\varepsilon$.

As clear from above equation 12, $\varepsilon$ is $-1 < \varepsilon \le 1$, and is the value to be easily encoded because $\varepsilon$ has upper and lower limits. Here, $\varepsilon$ equals 1 when $P_L = P_R$, and $\varepsilon$ becomes close to -1 when left channel signal L and right channel signal R have opposite phases and one has a slightly higher amplitude than the other.

Conversion mode identification information m acquired as above, which is one-bit information, is multiplexed in multiplexing section 502. Also, coefficient ε is outputted to coefficient encoding section 513.

Coefficient encoding section 513 encodes coefficient ε outputted from coefficient calculating section 512, with reference to a codebook stored inside, and outputs the result to multiplexing section 502. With the present embodiment, coefficient ε is encoded with four bits. Here, the power ratio (absolute value) of coefficient ε is likely to be closer to a value of 1, and, consequently, the codebook as shown in FIG.2 can be used upon encoding coefficient ε. At this time, similar to Embodiment 1, it is possible to use a tree search upon a search using a codebook.

Also, coefficient encoding section 513 outputs coefficient value η corresponding to encoded data of coefficient ε ($\alpha_i$ when FIG.2 is used), to sum and difference calculating section 514.

Multiplexing section 502 multiplexes encoded data of monaural signal M, encoded data of side signal S, encoded data of coefficient ε and identification information m of the conversion mode used upon calculating coefficient ε, and outputs the resulting bit stream.

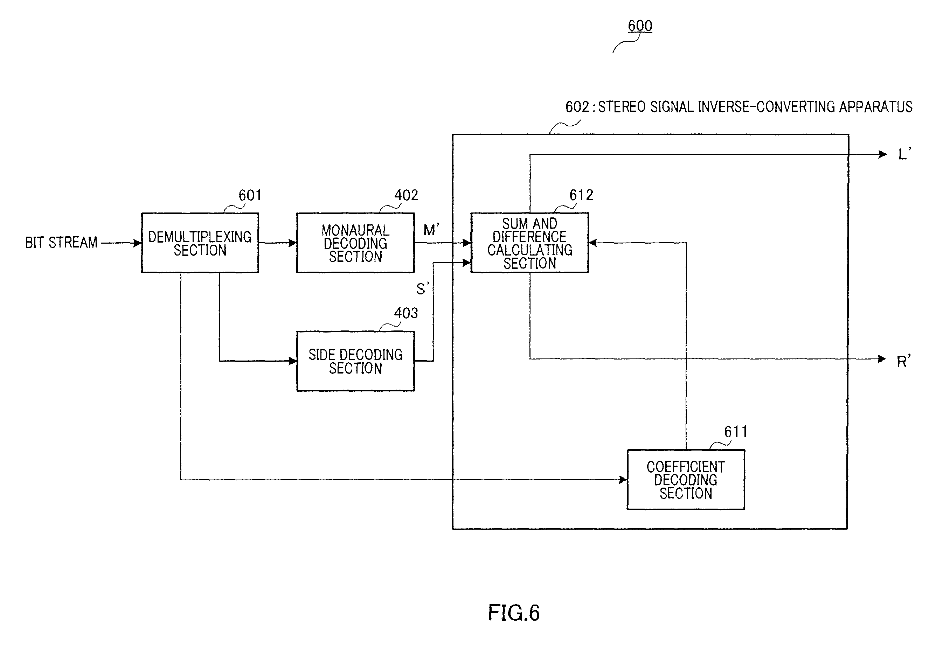

FIG.6 is a block diagram showing the configuration of a decoding apparatus including a stereo signal inverse-converting apparatus according to Embodiment 3 of the present invention. Decoding apparatus 600 shown in FIG.6 is mainly provided with demultiplexing section 601, monaural decoding section 402, side decoding section 403 and stereo signal inverse-converting apparatus 602.

Stereo signal inverse-converting apparatus 602 includes coefficient decoding section 611 and sum and difference calculating section 612.

Demultiplexing section 601 demultiplexes a bit stream received in decoding apparatus 600 and outputs encoded data of monaural signal M to monaural decoding section 402, encoded data of side signal S to side decoding section 403, and encoded data of coefficient ε and conversion mode identification information m to stereo signal inverse-converting apparatus 602.

Coefficient decoding section 611 decodes the encoded data of coefficient ε with reference to the same codebook as in FIG.2 stored inside, specifies value $\alpha_i$ corresponding to the encoded data of coefficient ε, and, using this value $\alpha_i$ and conversion mode identification information m, calculates value η of coefficient ε according to equation 13. That is, coefficient ε was converted in accordance with a conversion mode in encoding apparatus 500, and, consequently, decoding apparatus 600 performs inverse-conversion according to equation 13.

[13]

$$if \quad m = 0 \quad then \quad \eta = a_i$$
$$if \quad m = 1 \quad then \quad \eta = 1/a_i \quad \quad ...(Equation\ 13)$$

Value η of coefficient ε calculated as above is outputted to sum and difference calculating section 612.

According to equation 14, sum and difference calculating section 612 calculates left channel reconstructed signal L' and right channel reconstructed signal R' using monaural reconstructed signal M' outputted from monaural decoding section 402, side reconstructed signal S' outputted from side decoding section 403 and value η of coefficient ε.

[14]

$$X_i^M = X_i^L + X_i^R$$
$$X_i^S = X_i^L - \frac{\left\{ i \cdot \eta + (I - i) \cdot \eta^{(-1)} \right\}}{I} \cdot X_i^R$$

$X_i^M$: signal M'
$X_i^S$: signal S'
$X_i^L$: signal L'
$X_i^R$: signal R'
η: the value of decoded coefficient ε
$\eta^{(-1)}$: the value of coefficient ε in the previous frame (where the initial value is a predetermined fixed value) ...(Equation 14)

As clear from above equation 14, the coefficient by which $X_i^R$ is multiplied in the current decoding processing unit (frame unit in this case) is gradually changed from $\eta^{(-1)}$, which is used in the end of the previous frame, to η, as element number i increases in the current frame. By this means, good continuity of signal S is provided, so that it is possible to improve speech quality significantly, especially when encoding a plurality of frames.

Also, signal M acquired as above represents the main elements of signal L and signal R more faithfully. Also, signal S is influenced by the coding distortion caused by coding/decoding of coefficients but is substantially orthogonal to signal M, thereby representing the spatially different part between signal L and signal R more faithfully. Therefore, the encoding apparatus side can perform suitable coding by encoding signal M and signal S, and the decoding apparatus side can provide stereo signals of high quality.

Also, if signal S is calculated using coefficient $\varepsilon$ before coding for subtraction, signal S and signal M are completely orthogonal. This is proven in the same way as in equation 5 of Embodiment 1. That is, it is proven from the fact that the product sum of the two equations shown in equation 14 is 0. Here, coefficient calculation base value $\gamma$ is used instead of $\eta$ in equation 14.

Also, a case has been described above with the present embodiment where the step of finding a difference is fixed to subtract right channel signal R from left channel signal L. However, the present invention is not limited to this, and it is equally possible to fix the step to subtract left channel signal L from right channel signal R. In this case, left channel signal L and right channel signal R need to be replaced with each other in explanation of the present embodiment.

Also, the step of finding a difference may be changed in the same way as in Embodiment 1. However, in order to maintain the "continuity of signal S" as shown in the present embodiment, it is preferable to fix the step of finding a difference.

Also, although cases have been described above with embodiments where the number of coding bits for coefficient $\alpha$ is four bits, the present invention is not limited to this, and it is equally possible to make the number of coding bits for coefficient $\alpha$ much larger or smaller than four bits. If the number of coding bits is increased, the number of variations to represent coefficient $\alpha$ is increased, so that it is possible to provide higher quality. If the number of coding bits is decreased, the number of coding bits is decreased, so that it is possible to realize decreased bits. Also, if the codebook size is set to a power of two, it is possible to use the search algorithm shown in FIG.3 as is after changing only the initial value.

Also, according to the present invention, the division in equation 6 may be implemented in equation 4. In this case, conversion and inverse-conversion are as shown in following equations 15 and 16, respectively. Here, $\alpha\hat{}$ represents decoded coefficient $\alpha$.

[15]

$$\text{If } P_L < P_R: \quad X_i^S = (X_i^L - \hat{\alpha} \cdot X_i^R) \ /(1 + \hat{\alpha})$$

$$\text{If } P_L \geq P_R: \quad X_i^S = (X_i^R - \hat{\alpha} \cdot X_i^L) \ /(1 + \hat{\alpha}) \quad \dots(\text{Equation 15})$$

[16]

$$\text{If } P_L < P_R: \quad \begin{aligned} Y_i^L &= \hat{\alpha} \cdot Y_i^M + Y_i^S \\ Y_i^R &= Y_i^M - Y_i^S \end{aligned}$$

$$\text{If } P_L \geq P_R: \quad \begin{aligned} Y_i^L &= Y_i^M - Y_i^S \\ Y_i^R &= \hat{\alpha} \cdot Y_i^M + Y_i^S \end{aligned} \quad \dots(\text{Equation 16})$$

Also, although two stereo signals are expressed by the names "left channel signal" and "right channel signal" in the above embodiments, it is equally possible to use more general names such as "first channel signal" and "second channel signal.

Also, although cases have been described with the above embodiments where encoded information is transmitted from the encoding side to the decoding side, the present invention is equally effective to a case where information encoded on the encoding side is stored in a storage medium. There are many cases where audio signals are accumulated and used in a memory or disk, and the present invention is equally effective to these cases.

Also, although cases have been described with the above embodiments where two channels are used, the number of channels is not limited, and the present invention is equally effective to a case where many channels (e.g. 5.1 channels) are used. In this case, if channels correlated to a fixed channel with time differences are clarified, the present invention is directly applicable to this case.

Also, although cases have been described with the above embodiments where a monaural signal and a side signal are encoded, the present invention is not limited to this, and is equally effective to a method using only a monaural signal. By using the present invention, it is possible to correct a phase difference and perform down-mix processing, so that it is possible to provide a monaural signal of high quality which is closer to an excitation.

Also, the above explanation is an example of the best mode for carrying out the present invention, and the scope of the present invention is not limited to this. The present invention is applicable to systems in any cases as long as these systems include a stereo signal converting apparatus and stereo signal inverse-converting apparatus.

Also, the stereo signal converting apparatus and stereo signal inverse-converting apparatus according to the present invention can be mounted on a communication terminal apparatus and base station apparatus in a mobile communication system, so that it is possible to provide a communication terminal apparatus, base station apparatus and mobile communication system having the same operational effects as above.

Although example cases have been described with the above embodiments where the present invention is implemented with hardware, the present invention can be implemented with software. For example, by describing the algorithm according to the present invention in a programming language, storing this program in a memory and running this program by an information processing section, it is possible to realize the same function as the present invention.

Furthermore, each function block employed in the description of each of the aforementioned embodiments may typically be implemented as an LSI constituted by an integrated circuit. These may be individual chips or partially or totally contained on a single chip.

"LSI" is adopted here but this may also be referred to as "IC," "system LSI," "super LSI," or "ultra LSI" depending on differing extents of integration.

Further, the method of circuit integration is not limited to LSI's, and implementation using dedicated circuitry or general purpose processors is also possible. After LSI manufacture, utilization of an FPGA (Field Programmable Gate Array) or a reconfigurable processor where connections and settings of circuit cells in an LSI can be reconfigured is also possible.

Further, if integrated circuit technology comes out to replace LSI's as a result of the advancement of semiconductor technology or a derivative other technology, it is naturally also possible to carry out function block integration using this technology. Application of biotechnology is also possible.

The disclosures of Japanese Patent Application No. 2008-098736, filed on April 4, 2008, and Japanese Patent Application No. 2008-284492, filed on November 5, 2008, including the specifications, drawings and abstracts, are incorporated herein by reference in their entireties.

Industrial Applicability

The stereo signal converting apparatus, stereo signal inverse-converting apparatus and converting and inverse-converting methods of the present invention are suitably used for mobile phones, IP (Internet Protocol) telephones and television conference, and so on.

**Claims**

1. A stereo signal converting apparatus comprising:

   a correlation analyzing section that calculates a correlation value between a first channel signal and a second channel signal forming a stereo signal;
   a coefficient calculating section that calculates a first coefficient based on the correlation value;
   a coefficient encoding section that encodes the first coefficient and calculates a second coefficient based on resulting encoded data; and
   a sum and difference calculating section that generates a monaural signal related to a sum of the first channel signal and the second channel signal, and, using the second coefficient, generates a side signal related to a difference between the first channel signal and the second channel signal.

2. The stereo signal converting apparatus according to claim 1, wherein the sum and difference calculating section generates the side signal by subtracting, from one of the first channel signal and the second channel signal, the other signal multiplied by the second coefficient.

3. The stereo signal converting apparatus according to claim 2, wherein the sum and difference calculating section determines a signal that is multiplied by the second coefficient, based on a magnitude relationship between power of the first channel signal and power of the second channel signal.

4. The stereo signal converting apparatus according to claim 1, wherein the sum and difference calculating section generates the side signal by subtracting, from the first channel signal, the second channel signal multiplied by one of the second coefficient and a reciprocal of the second coefficient.

5. The stereo signal converting apparatus according to claim 4, wherein the sum and difference calculating section determines whether to use the second coefficient or the reciprocal of the second coefficient for multiplication, based on a magnitude relationship between power of the first channel signal and power of the second channel signal.

6. The stereo signal converting apparatus according to claim 1, wherein the coefficient calculating section calculates the first coefficient used in a current signal conversion unit, based on power of the first channel signal, power of the second channel signal, the correlation value, power of the first channel signal or the second channel signal weighted by an element number for specifying an order of elements included in a signal conversion unit of a current signal conversion target, the correlation value weighted by the element number and the second coefficient calculated in a previous signal conversion unit.

7. The stereo signal converting apparatus according to claim 6, wherein the signal conversion unit comprises a frame.

8. An encoding apparatus comprising:

the stereo signal converting apparatus according to claim 1;
a first encoding section that encodes a monaural signal generated in the stereo signal converting apparatus;
a second encoding section that encodes a side signal generated in the stereo signal converting apparatus; and
a multiplexing section that multiplexes encoded data of the monaural signal, encoded data of the side signal and encoded data of the coefficients.

9. A stereo signal inverse-converting apparatus comprising:

a coefficient decoding section that decodes encoded data, which is acquired in a stereo signal converting apparatus by encoding a first coefficient calculated based on a correlation value between a first channel signal and a second channel signal forming a stereo signal, and calculates a second coefficient; and
a reconstructed signal generating section that generates a reconstructed signal of the first channel signal and a reconstructed signal of the second channel signal using a monaural reconstructed signal, a side reconstructed signal and the second coefficient, the monaural reconstructed signal decoding encoded data of a monaural signal related to a sum of the first channel signal and the second channel signal, and the side reconstructed signal decoding encoded data of a side signal related to a difference between the first channel signal and the second channel signal.

10. A decoding apparatus comprising:

a first decoding section that decodes the encoded data of the monaural signal and generates the monaural reconstructed signal;
a second decoding section that decodes the encoded data of the side signal and generates the side reconstructed signal; and
the stereo signal inverse-converting apparatus according to claim 9.

11. A stereo signal converting method comprising:

a correlation analyzing step of calculating a correlation value between a first channel signal and a second channel signal forming a stereo signal;
a coefficient calculating step of calculating a first coefficient based on the correlation value;
a coefficient encoding step of encoding the first coefficient and calculating a second coefficient based on resulting encoded data; and

a sum and difference calculating step of generating a monaural signal related to a sum of the first channel signal and the second channel signal, and, using the second coefficient, generating a side signal related to a difference between the first channel signal and the second channel signal.

12. A stereo signal inverse-converting method comprising:

a coefficient decoding step of decoding encoded data, which is acquired in a stereo signal converting method by encoding a first coefficient calculated based on a correlation value between a first channel signal and a second channel signal forming a stereo signal, and calculating a second coefficient; and
a reconstructed signal generating step of generating a reconstructed signal of the first channel signal and a reconstructed signal of the second channel signal using a monaural reconstructed signal, a side reconstructed signal and the second coefficient, the monaural reconstructed signal decoding encoded data of a monaural signal related to a sum of the first channel signal and the second channel signal, and the side reconstructed signal decoding encoded data of a side signal related to a difference between the first channel signal and the second channel signal.

101 : STEREO SIGNAL CONVERTING APPARATUS

100

FIG.1

| CODE | COEFFICIENT VALUE $\alpha_i$ | SEARCH REFERENCE VALUE $\delta_i$ |
|---|---|---|
| 0 | 1. 0 | — |
| 1 | 0. 97 | 0. 985 |
| 2 | 0. 94 | 0. 955 |
| 3 | 0. 88 | 0. 91 |
| 4 | 0. 8 | 0. 84 |
| 5 | 0. 7 | 0. 75 |
| 6 | 0. 5 | 0. 6 |
| 7 | 0. 3 | 0. 4 |
| 8 | 0. 0 | 0. 15 |
| 9 | −0. 3 | −0. 15 |
| 10 | −0. 5 | −0. 4 |
| 11 | −0. 7 | −0. 6 |
| 12 | −0. 8 | −0. 75 |
| 13 | −0. 9 | −0. 85 |
| 14 | −0. 95 | −0. 925 |
| 15 | −0. 98 | −0. 965 |

FIG.2

FIG.3

400

404 : STEREO SIGNAL INVERSE-CONVERTING APPARATUS

401

BIT STREAM → DEMULTIPLEXING SECTION

402

MONAURAL DECODING SECTION

M'

403

SIDE DECODING SECTION

S'

412

SUM AND DIFFERENCE CALCULATING SECTION

L'

R'

411

COEFFICIENT DECODING SECTION

FIG.4

BIT STREAM

501 : STEREO SIGNAL CONVERTING APPARATUS

500

502 — MULTIPLEXING SECTION

102 — MONAURAL ENCODING SECTION

103 — SIDE ENCODING SECTION

514 — SUM AND DIFFERENCE CALCULATING SECTION

513 — COEFFICIENT ENCODING SECTION

512 — COEFFICIENT CALCULATING SECTION

511 — CORRELATION ANALYZING SECTION

M

S

L

R

FIG.5

FIG.6

**EP 2 264 698 A1**

| INTERNATIONAL SEARCH REPORT | International application No. |
| --- | --- |
| | PCT/JP2009/001572 |

**A. CLASSIFICATION OF SUBJECT MATTER**
*G10L19/00*(2006.01)i

According to International Patent Classification (IPC) or to both national classification and IPC

**B. FIELDS SEARCHED**

Minimum documentation searched (classification system followed by classification symbols)
G10L11/00-21/06

Documentation searched other than minimum documentation to the extent that such documents are included in the fields searched
Jitsuyo Shinan Koho          1922-1996   Jitsuyo Shinan Toroku Koho   1996-2009
Kokai Jitsuyo Shinan Koho    1971-2009   Toroku Jitsuyo Shinan Koho   1994-2009

Electronic data base consulted during the international search (name of data base and, where practicable, search terms used)
JSTPlus(JDreamII)

**C. DOCUMENTS CONSIDERED TO BE RELEVANT**

| Category* | Citation of document, with indication, where appropriate, of the relevant passages | Relevant to claim No. |
| --- | --- | --- |
| A | WO 2008/016097 A1  (Matsushita Electric Industrial Co., Ltd.), 07 February, 2008 (07.02.08), Full text; all drawings & EP 2048658 A | 1-12 |
| A | JP 2008-511044 A  (Dolby Laboratories Licensing Corp.), 10 April, 2008 (10.04.08), Full text; all drawings & US 2008/0126104 A1    & EP 1782417 A & WO 2006/026452 A1     & CA 2576739 A & KR 10-2007-0051856 A  & CN 101010723 A & BRA PI0514620 | 1-12 |

| ☒ Further documents are listed in the continuation of Box C. | ☐ See patent family annex. |
| --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 19 June, 2009 (19.06.09) | 07 July, 2009 (07.07.09) |

| Name and mailing address of the ISA/ | Authorized officer |
| --- | --- |
| Japanese Patent Office | |
| Facsimile No. | Telephone No. |

Form PCT/ISA/210 (second sheet) (April 2007)

**INTERNATIONAL SEARCH REPORT**

International application No.

PCT/JP2009/001572

C (Continuation).   DOCUMENTS CONSIDERED TO BE RELEVANT

| Category* | Citation of document, with indication, where appropriate, of the relevant passages | Relevant to claim No. |
|---|---|---|
| A | JP 11-32399 A  (Sony Corp.),<br>02 February, 1999 (02.02.99),<br>Full text; all drawings<br>& US 6356211 B1        & EP 878798 A2<br>& DE 69829242 D        & DE 69829242 T<br>& CN 1199202 A | 1-12 |

Form PCT/ISA/210 (continuation of second sheet) (April 2007)

**INTERNATIONAL SEARCH REPORT**

International application No.

PCT/JP2009/001572

"A calculating means for calculating a first coefficient from the correlation value" is stated in claim 1. However, how the correlation value is used to calculate the first coefficient is not specifically stated.

"A sum/difference calculating means for generating a side signal concerning the difference between the first channel signal and the second channel signal by using the second coefficient" is stated in claims 1. However, how the second coefficient obtained according to the coded data obtained by coding the first coefficient is used to generate the side signal is not specifically stated.

Therefore, although the invention of claim 1 covers a wide scope, the matter supported by the disclosure by the description within the meaning of PCT Article 6 is the one in which the first coefficient is obtained by using [formula 2], [formula 8], or [formula 12], and the side signal is obtained by using [formula 4], [formula 8], or [formula 15].

The same holds true for claims 2-12.

Therefore, the search has been made on the scope supported by the disclosure by the description, namely, the matter in which the first coefficient is obtained by using [formula 2], [formula 8], or [formula 12], and the side signal is obtained by using [formula 4], [formula 8], or [formula 15].

Form PCT/ISA/210 (extra sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2001255892 A
- JP 2008098736 A
- JP 2008284492 A